# EUROPEAN PATENT SPECIFICATION

(11) **EP 2 269 349 B1**
(45) Date of publication and mention of the grant of the patent: **23.07.2014**
(21) Application number: 09726749.6
(22) Date of filing: 01.04.2009
(51) Int. Cl.: H04L 12/58, H04M 3/537, H04M 3/533

(54) **Voice mail processing**
Sprachmitteilungsverarbeitung
Traitement de courrier vocal

(30) Priority: 02.04.2008 US 64905
(43) Date of publication of application: 05.01.2011
(73) Proprietor: Markport Limited, Dublin 2 (IE)
(72) Inventor: BROUWER, Sander, NL-4207 Gorinchem ZH (NL); GEEN, David, Beaverdam VA 23015 (US); WIJBRANS, Klaas, NL-5121 MV Rijen (NL)
(74) Representative: Weldon, Michael James
(86) International application number: PCT/IE2009/000013
(87) International publication number: WO 2009/122389

(56) References cited:
- WO-A-2007/048216
- WO-A-2007/091261
- WO-A-2007/131060
- US-A1- 2005 069 095
- US-A1- 2006 268 750
- US-A1- 2007 239 835

## Description

### Field of the Invention

The invention relates to voice mail processing in telephony networks.

### Prior Art Discussion

It is known to provide a voicemail system which sends voicemail notification to the user, soliciting him or her to dial into the voicemail system. Voicemail notifications to mobiles can be delivered as 'opaque alerts', i.e. visual icon, or SMS, in which case information as to message originator/message length is typically provided. In either case, upon dialling into the voicemail system, the user typically has to sequentially listen to all messages of a given disposition, such as unread, urgent.

GB2420946 describes a system in which there is voice-to-text transcribing to transmit a text message for a voicemail. Where transcribing is not possible a notification text message is sent to the device that includes a unique identification that links to the voice message held at the voicemail server. The device, using extended client software, navigates a menu in which there is a visual view of options for requesting playback of the message.

US7248857 (Cingular) describes a system and method for message notification according to subscriber preference profiles. In Fig. 8 of this specification a screen is illustrated which gives an option to a user to call a voice mail ("VM"). However, there is no description of how this may be done in a manner outside of the conventional manner, described above.

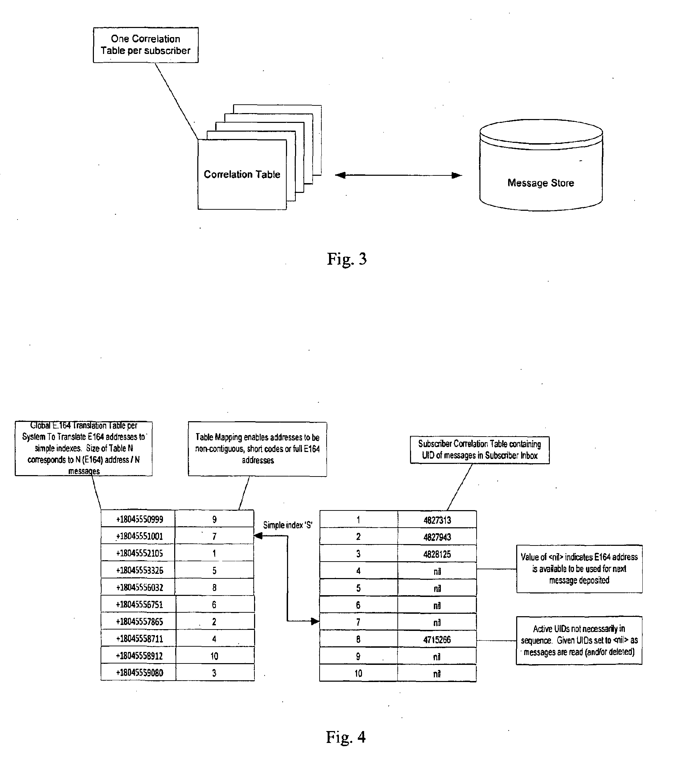

US2005/0186945 (Mazor) describes a system for notifying a device of a voicemail, receiving a response from the device, and sending information regarding the message to the device. The process for accessing voicemails as set out in Fig. 3A of this document appears to be complex. US20080008163 (Castell) describes a messaging system in which there is voice mail access. This is described in its Fig. 8 at step 442. The mechanism appears to rely on an out-dial to the mobile device.

US 2006/0268750 (Weiner) describes a method for retrieving voice messages.

The present invention is directed towards providing for simpler user access to voicemails, with no added functionality required in the mobile device.

### SUMMARY OF THE INVENTION

According to the invention, there is provided a voicemail notification method as set out in claim 1.

In another aspect, the invention provides a voicemail system as set out in claim 11 and a computer program product as set out in claim 12.

In one embodiment, the notification message is an SMS.

In one embodiment, circuit switched technology is used by the recipient device for dialling the access number.

In one embodiment, the notification is structured for an automatic preview by the recipient device.

In one embodiment, the recipient device performs automatic recognition of the access number in the notification message.

In one embodiment, the access number has a length N equal to that dictated by the E.164 numbering plan for the applicable country and region.

In one embodiment, length N of the access number exceeds the length of the E.164 number as dictated by the E.164 numbering plan for the applicable country and region, but is less than or equal to the maximum length of an E.164 number as defined by the standards.

In one embodiment, the access number is a short code, having a length less than that dictated by an E.164 numbering plan for the applicable country and region.

In another embodiment, the access number includes a general access number string and a suffix.

In one embodiment, the method comprises the step of the voicemail system performing translation of access numbers to indexes that are used to correlate to voicemails per subscriber.

In one embodiment, all of the digits of the access number, including the suffix, are transferred by the recipient device and the network as part of call setup signalling for the voicemail access request call by the recipient device.

In one embodiment, all digits of the access number fit within the ISUP signalling domain, and network elements including MSCs are configured to route the voicemail access request call using only a portion of the access number digits, the remaining digits being used by the voicemail system for retrieving and playing back the voicemail.

In one embodiment, the access number is logically linked with sets of messages according to a parameter such as time or message originator.

In one embodiment, there is a correlation table for each recipient or recipient device.

In one embodiment, a translation table provides an index to the correlation table.

In one embodiment, if multiple messages are deposited by the same originator for a single recipient device, the voicemail system references in the correlation table a list of the voicemails from the same originator and plays back some or all of the voicemails in response to a single access request call from the recipient device.

In a further aspect, the invention provides a computer program product as set out in claim 12.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a high level diagram showing context of a voicemail access method of the invention;
Fig. 2 is a message sequence diagram showing deposit of a message;
Figs. 3 and 4 show use of correlation tables; and
Figs. 5 and 6 are message sequence diagrams showing, respectively, voicemail notification and retrieval processes.

### Description of the Embodiments

Glossary of terms and their definitions:
- Calling line identification:: The telephone number/MSISDN of an originator or recipient of a voicemail message.
- Voicemail Notification:: A textual, marked up or binary message that is usually sent via SMS, notifying a user about the availability of one or more new voicemail messages.

In one embodiment, a user directly accesses a stored voicemail message through an SMS and circuit switched voice channel. This has the benefits for the user to directly access a particular voice message stored in the network without the need to listen sequentially through some or all stored voicemail messages or having to listen to a generic operator greeting with the number of messages. An additional benefit is that the user does not need to install special client software on his mobile device, nor does he need to change the configuration of his device. The method is reliable because no additional digits are required outside of the standard E.164 numbering plan, ensuring that the voicemail is identified using ISUP signalling during the set up of a connection instead of DTMF tones after the connection has been set up.

The communication methods between the device and the voicemail system are solely based on SMS and circuit switched telephony, which are ubiquitously available on mobile device models and in networks, while giving users a more streamlined and simple interactive voicemail experience. The voicemail system sends a voicemail notification SMS containing the depositor's address as the sender address, and an access number in the body text. The access number allows direct access to the voicemail. Through the SMS auto-preview function in the mobile device's standard SMS inbox, a basic interactive voicemail experience is achieved because the device can directly retrieve the voicemail using the access number.

The receipt of the voicemail notification on the device enables the recipient device to dial to the voicemail system for message-specific access. In the voicemail server, the combination of the user's calling line identification (CLI) and an access number provide message-specific access. The access number may be re-used at another time in combination with a different recipient's CLI to provide access to a different voicemail. Because the combination of the recipient's CLI and the access number is used to uniquely identify the stored message, the number of access numbers can stay limited (the quantity of access numbers required is equivalent to the maximum number of voice messages allowed in a given subscriber mailbox, typically well below 100), while giving a wide range of possible unique keys to directly access a stored message (namely number of subscribers multiplied by the number of access numbers).

The voicemail system maintains the relationship between the combination of access number and the recipient subscriber's CLI on one side and an internal message key on the other side.

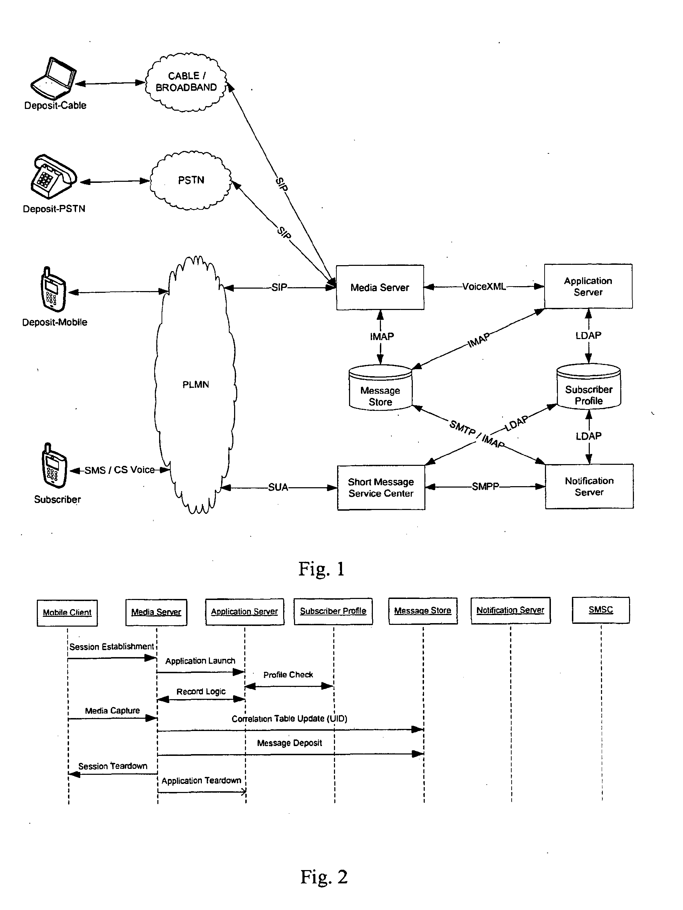

The architecture of a voicemail system in relation to the network is shown in Fig. 1. The voicemail system consists of:
- Media server, responsible for accepting calls, the recording of incoming voice traffic to audio files and the playing of audio files as outgoing voice traffic.
- Application server, responsible for the business logic when picking up calls and executing the deposit logic or retrieval logic.
- Notification server, responsible for sending out voicemail notifications.
- Message store, responsible for storing the recorded voicemail messages.
- Subscriber profile database, responsible for retaining subscriber information including personalization information.

The notification server in the voicemail system uses the short message service centre to deliver the voicemail notification.

The invention modifies the application server, media server, and the notification server of the voicemail system. In addition, it stores additional information in the message store and optionally in the subscriber profile database. Further, in some embodiments, the invention introduces configuration changes to the SMSC (or SMS router).

### Access numbers

As set out above, the network uses a limited set of access numbers with length N and encodes an identification code for a specific voicemail message with the access number to provide a unique access number. Three access methods are recognized:
Case (A)
   Length N of the access number is equal to the length of the E.164 number as dictated by the E.164 numbering plan for the applicable country and region. Each access number in combination with the user's calling line identification is a voicemail message access number enabling direct access to the intended message. Example: national length E.164 number range is 10; available access numbers are 8013331100, 8013331101, 8013331102 ... 8013331199 where the last two digits are used to identify a specific access number. Alternative example: national length E.164 number range is 10 and the whole non-consecutive numbers are used as the identification code like 8013431165, 8014331101, 801463128 and 8015331199 where the whole number is mapped back to an identification for a specific message.
Case (B)
   Length N of the access number exceeds the length of the E.164 number as dictated by the E.164 numbering plan for the applicable country and region, but is less than or equal to the maximum length of an E.164 number as defined by the standards. In this case a suffix is added to the general voicemail access number. The interpreted numeric suffix is used as a key in combination with the rest of the access number and the user's CLI to directly access the intended message. Case B assumes that suffix digits are preserved during call set-up phase. This may require network administration changes in network elements such as for example MSCs and/or STPs in order to route such access numbers to the voicemail server. Example: national length E.164 number range is 10, general voicemail access number is 8013331100, available access numbers with a two-digit suffix are 801333110000, 801333110001, 801333110002, 801333110003, ... 801333110099 where the last two digits are used as the identification code.
Case (C)
   Length N of the access number is less than the minimum number length as dictated by the E.164 numbering plan for the applicable country and region. Typically this means that the access number is a short code. The short code itself is used in combination with the user's Calling Line Identification to directly access the intended message. Example: national length E.164 number range is 10, available access numbers are 200, 201, 202, 203 ... 299 where the last two digits are used as the identification code. Alternatively the whole shortcode could be used as identification code where the whole shortcode is mapped back to an identification for a specific message.

Access method (C) can only be used for on-net access, for roaming cases method (A) or (B) shall be used. Note that case (C) also can be used within a group of operators (which could also be a global operator with subsidiaries) if they align their number plans and the subsequent call routing across the whole group to use the same access code and translate the appropriate country using the A-party international prefix.

Alternatively, in case the available access numbers are not sufficient to directly reference all individual messages stored in a subscriber's mailbox, the access numbers may be used to reference a logically grouped set of messages. Logical groups may be composed of messages sent within a time range, or messages deposited by the same originator, or any other grouping of messages.

### Deposit of voice mail

Upon session establishment, the recipient subscriber's (Subscriber B) profile is checked and the media is recorded. When caller A deposits a voicemail in the voicemail system for subscriber B, the voicemail system stores an index to directly access the voice message in a correlation table which it later uses in a special formatted voicemail notification SMS. This is depicted in Fig. 2.

### Maintain internal administration

Several tables may be used to implement the invention. The first (mandatory) table is a correlation table, unique to a given subscriber, which maps simple indexes S, i.e. 1 - N, with a unique identifier to the voicemail in the subscriber mailstore, called the subscriber correlation table. The correlation table is particularly advantageous because unique identifiers used in standards-based message stores, i.e. IMAP UID of a stored message, are complex, i.e. 32 bit numbers, which are made 'simple' via the correlation table. Mapping of the correlation table to a subscriber mailstore is depicted in Fig. 3.

Optionally, a second table may be used to translate non-consecutive E.164 addresses to simple indexes. This is called a translation table, and is depicted in Fig. 4. E.164 addresses are dialable entities from the client perspective which are then used to access the specific messages via the translation table and the correlation tables. The E.164 addresses used in the given deployment may be contiguous or non-contiguous, full E164 addresses (case A), 'longer than' full E164 addresses (case B), or short codes (case C). Mapping of these addresses to simple indexes is achieved via regular expressions.

Optionally, one or more digits in the simple index S may be randomly generated and encoded by the voicemail system as an additional security measure on top of CLI verification, to prevent an unauthorized caller accessing the voice message.

A typical implementation would be:
- A message is recorded on the voicemail system and the depositor's address is stored.
- The UID where the next message will be stored is determined, e.g. using an IMAP CHECK operation.
- A free entry in the correlation table is updated with the UID determined using index 'S', which is essentially a pointer to the Sth entry in the table, which contains the UID of the message. This is depicted in Fig. 4.
- The correlation table is updated in the subscriber inbox, which is stored in a hidden folder.
- The message is deposited into the subscriber's mailbox according to the determined UID, e.g. using an IMAP APPEND operation.

### Preparation of formatted voicemail notification

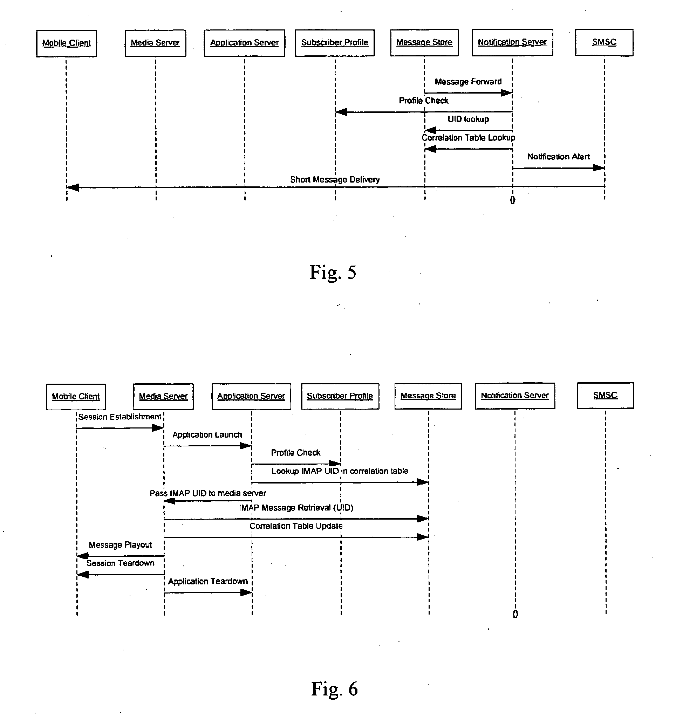

The following flow is illustrated in Fig. 5. After the successful deposit of the message and the update of the correlation table, the following steps are performed to create the voicemail notification:
- The message store forwards the deposited message to the notification server.
- The notification server checks the subscriber profile.
- The notification server looks up the message in the message store to determine the UID using the Message-ID.
- The notification server looks up the index S in the correlation table in the message store using the UID.
- The notification server constructs the SMS notification with a specific access number by either encoding index S in the common access number (e.g., replacing the last two digits of an access number (first example of case A, or case C) or appending S to the common access number (case B or case C), or by translating S to a specific access number using a table lookup in a global table containing the relation between index S and a specific access number and sends it to the SMSC.
- The SMSC delivers the SMS notification to the handset.

In order for the voicemail system to determine the parameters for the notification, the following is determined:
- The index S of this particular voice message in Subscriber B's mailbox resulting from the lookup in the correlation table. Alternatively, the voice messages in Subscriber B's mailbox could be organized in such a way that S points to the start of a linked list of messages from the same originator so that Subscriber B can listen to all messages deposited by the same originator subsequently.
   - The length L of the recorded voice message. The length is optional and is presented for usability purposes rather than needed for functioning of the method itself. The same comment applies for A's calling line id, below.
- The caller A's calling line identification
- A constructed voicemail access number that contains index S, or from which index S can be derived through some mathematical operation or table lookup.

In a preferred embodiment the voicemail notification is formatted as follows before it is sent over SMS:
- Sender address = caller A's CLI
- Text is in the format "Sent a V-Message of <L> m
- Please dial <constructed voicemail access number> to listen."
- Optionally: Originating service centre address = private service centre address for voicemail system, in combination with usage of the SMS reply path indicator. This facilitates SMS replies to be routed back to the voicemail system.

In this embodiment, on the subscriber B's device, the voicemail notification will end up in the recipient subscriber's SMS inbox, and will (dependent on device capabilities) show the first line in the SMS in the inbox overview using the auto-preview function. As the sender address of the voicemail notification has been filled with caller A's CLI, this results in an address match with the phone's local address book, which results in an intuitive voicemail notification experience. For example, after having received multiple voicemail notifications, the SMS inbox can look something like:
Jim
Sent you a V-Message of 0:36m.
John
Sent you a V-Message of 1:02m
Sharon
Sent you a V-Message of 0:45m

When opening the third voicemail notification from the SMS inbox, the sequence number for the voice message will be 02, and therefore the constructed voicemail access number may be constructed as +18021234502. The SMS will show the following contents:
Sharon
Sent you a V-Message of 0:45m
Please dial +18021234502 to listen.

The invention takes advantage of the auto-recognition function of a telephone number inside an SMS, which is an existing feature of most modem mobile phones. The subscriber can move the cursor through the message text to the constructed voicemail access number and just press the dial button to dial into the voicemail system to directly access the stored voice message over the circuit switched voice channel.

As not all phones support the auto recognition of a telephone number inside the SMS, in another embodiment the voicemail notification may alternatively be formatted as follows before it is sent over SMS:
Sender address = <constructed voicemail access number>
Text is in the format "<caller A's CLI> sent a V-Message of <L> m
Please dial <constructed voicemail access number> to listen."

The exact configuration of the voicemail notification text is subject to operator configuration, but will in any case contain the direct index S or a reference to S via the <constructed voicemail access number>, and/or via an SMS keyword for direct message access.

In one embodiment, multiple messages are assigned in a correlation table to a single access number. For example a single originator may leave multiple messages, and each one is added by the voicemail system to the list for that access number.

### Retrieval

In one embodiment (refer to Fig. 6), the subscriber B dials the constructed voicemail access number as contained in the text of the voicemail notification. Subsequently the call is connected to the voicemail system. The voicemail system then uses subscriber B's CLI to identify subscriber B's mailbox, and reconstructs index S from the constructed voicemail access number by either extracting S from the dialled access number or translating the dialled access number to the index S using a translation table lookup. The UID of the message is determined by a lookup using the index S in the relevant subscriber correlation table. The voicemail system accesses the intended voice message in subscriber B's mailbox using the UID retrieved from the correlation table. The combination of both parameters enables the voicemail system to uniquely identify, retrieve, and play the stored voice message that was recorded by the caller. If multiple messages deposited by the same originator are stored in the subscriber's inbox, the voicemail system may offer an option to the caller to listen to previous or next messages deposited by the same originator in the same voice session.

### Direct actions on messages using SMS

The technique of encoding the identity of a specific voicemail message in the access number can advantageously be used additionally to operate directly on a voice mail message through the sending of commands (i.e. command-specific keywords for example to request to permanently STORE the voice message, DELETE the voice message, or FORWARD the voice message) through SMS messages that implicitly or explicitly contain the voice mail access number as the identification of the message to be operated on To do this, four different use cases can be identified:
1. In the SMS notification sent to the phone, the phone number of the message depositor is provided as the originator address and the reply path indicator is set in combination with a configured specific different private service centre address associated with each specific voicemail access number. The recipient replies with an SMS containing a keyword only.
2. In the SMS notification sent to the phone, the phone number of the message depositor is provided as the originator address and there is no reply path indicator. The recipient replies with an SMS containing a keyword and the specific voice mail access number referenced in the text of the voicemail notification.
3. In the SMS notification sent to the phone the specific voicemail access number is provided as the originator address. The recipient replies with an SMS containing a keyword only.
4. The recipient of the SMS notification sends an SMS with a keyword directly to the specific voice mail access number.

### Case 1:

The recipient replies with an SMS containing a keyword only. As the reply path is set, this reply will be sent to the specific SC address contained in the original SMS notification. On this specific SC address (which could be a specific virtual SMSC co-located with the normal service centre or a specific virtual SMS router co-located with an SMS router), a fixed routing rule is created that forwards all messages handled by this SC to the voicemail access system. In one embodiment this can be realized by the SC delivering this reply SMS using an ESME connection which is configured to at least accept messages with the specific voice mail access number (associated with the specific SC address) and route such messages to the voice mail system. End user functionality is optimal here as it is sufficient to just reply to the received notification with a keyword using SMS, but also the user can still call the originator of the SMS message directly as that is the address of the originator of the message. Advantageously in this case the voice mail access number is indirectly provided via the reply path being set, with the reply being sent to the SC address in the original SMS notification and the reply then being routed onward to a voice mail system associated with at least the specific voice mail access number which is associated with the specific SC address.

### Case 2:

To enable the user to perform actions on the voice message through SMS to the voicemail system, an interaction with an SMSC or SMS router may be initiated where the voice mail system dynamically configures an SMS routing rule R on the SMSC or SMS router so that a potential SMS reply containing a specific keyword can be routed to the voicemail system, instead of being delivered to Party A. The routing rule R criteria will be a combination of the following SMS parameters:
- Originator = Subscriber B
- Recipient = Subscriber A
- A command keyword that can be interpreted by the Voicemail system to execute an action on a specific voice message
- The specific voice mail access number.

In this case not only the keyword, but also the specific voicemail access number identifying the message is filled in. The user however still can call the originator of the SMS notification directly.

### Case 3:

The end user replies to the SMS notification using the keyword. As the originator of the SMS notification is the specific voice mail access number, it is necessary to configure the range of voicemail access numbers or individual voicemail access numbers on the SMSC or SMS router to be routed to the voicemail server. Thus in one embodiment the SMSC of the end user will deliver this SMS using an ESME which is configured to at least accept messages with the specific voice mail access number and route such messages to the voice mail system. Handling of messages through SMS keywords is easy. The subscriber in this case does not have the ability to directly call the originator of the message from the received SMS notification as the originator of the SMS notification is the voice mail system.

### Case 4:

The end user creates a new SMS with the keyword only and sends that directly to the voicemail access number. In this case, it is necessary to configure the range of voice mail access numbers or individual voice mail access numbers on the SMSC or SMS router to be routed to the voice mail server. Thus in one embodiment the SMSC of the end user will deliver this SMS using an ESME which is configured to at least accept messages with the specific voice mail access number and route such messages to the voice mail system. End user experience is non optimal for doing operations on the voice mail message through SMS as the end user has to remember the voice mail access number and type it in as the address, or has to have a smart phone with automatic number recognition that also allows the sending of SMS messages directly from the recognized numbers. This option will work best with short access numbers.

In all above cases the voicemail system will evaluate the address of the notification recipient (mailbox owner) and the destination address of the reply (for example, the voicemail depositor or the voicemail access number), and the keyword used in the message, and subsequently executes the requested command on the specified voice message.

Specifically in Case 2, after the message has been deleted, either initiated by user command or by housekeeping, the voicemail system interacts again with the SMSC or SMS router to delete routing rule R from the configuration. This additional administration is not necessary with the other cases.

In other embodiments the following may apply:
depositing MMS messages with audio attachments for legacy users,
depositing e-mail messages with audio attachments for legacy users,
depositing of textual e-mail messages together with the use of text to speech to read them out to the user, or
depositing other text messages (SMS, IM, IMPS) together with the use of text to speech to read them out to the user.

The functionality can interact with personalization when creating and sending out the notification messages:
1. Blacklisting/whitelisting specific users for using a slot in the access numbers.
2. Based on device capabilities insert the constructed voice mail access number as the Sender address only if the specific device is not able to recognize telephone numbers in the message text.

The scope of this invention is not limited to mobile / circuit switched networks, but is equally applicable to voicemail for PC clients (e.g. Skype™), webmail/email clients, fixed line devices, set top boxes, widgets, or VOIP devices, where the legacy interactive voicemail notification method may be implemented through any messaging technology including but not limited to e-mail or instant messaging. As the correlation table is managed external to / as an add-on on top of the email server in which the messages are stored, the message store retains functionality required for unified communication / messaging; information in the message box is manageable via the range of devices found in today's networks.

The invention is not limited to the embodiments described but may be varied in construction and detail. For example, the server may perform a mathematical function or logical operation on the access number received from the device before proceeding to process it further. This may for example be decoding the access number because it was encoded when it was sent in the notification.

## Claims

1. A voicemail notification method carried out by a telephony network and comprising the steps of:
a voicemail system receiving and storing a voicemail sent by a depositor and addressed to a recipient device,
the voicemail system sending to the recipient device a notification message including an access number;
the recipient device, upon receipt of the notification message, transmitting a request to the voicemail system for access to the message by dialling the access number, and
the voicemail system receiving the dialled access number from the recipient device and using it to access the specific voicemail without further recipient input, and playing the voicemail back to the recipient device,
wherein the voicemail system combines the access number as a suffix with a subscriber code to uniquely address the specific stored voicemail, and so can use the same access number for a plurality of different recipients while providing unique access to each voicemail,
wherein the subscriber code is a calling line identification of the recipient,
wherein the voicemail system maintains in one or more tables correlations between access numbers on one side, and internal message indexes on the other side.

2. A voicemail notification method as claimed in claim 1, wherein the notification message is an SMS.

3. A voicemail notification method as claimed in claims 1 or 2, wherein circuit switched technology is used by the recipient device for dialling the access number.

4. A voicemail notification method as claimed in any preceding claim, wherein the notification is structured for an automatic preview by the recipient device, and wherein the recipient device performs automatic recognition of the access number in the notification message.

5. A voicemail notification method as claimed in any preceding claim, wherein the access number has a length N equal to that dictated by the E.164 numbering plan for the applicable country and region.

6. A voicemail notification method as claimed in any of claims 1 to 4, wherein length N of the access number exceeds the length of the E.164 number as dictated by the E.164 numbering plan for the applicable country and region, but is less than or equal to the maximum length of an E.164 number as defined by the standards.

7. A voicemail notification method as claimed in any of claims 1 to 4, wherein the access number is a short code, having a length less than that dictated by an E.164 numbering plan for the applicable country and region.

8. A voicemail notification method as claimed in any preceding claim, wherein the access number includes a general access number string and a suffix, and the method comprises the step of the voicemail system performing translation of access numbers to indexes that are used to correlate to voicemails per subscriber, and
wherein all of the digits of the access number, including the suffix, are transferred by the recipient device and the network as part of call setup signalling for the voicemail access request call by the recipient device,
and wherein all digits of the access number fit within the ISUP signalling domain, and network elements including MSCs are configured to route the voicemail access request call using only a portion of the access number digits, the remaining digits being used by the voicemail system for retrieving and playing back the voicemail.

9. A voicemail notification method as claimed in any preceding claim, wherein the access number is logically linked with sets of messages according to a parameter such as time or message originator.

10. A voicemail notification method as claimed in any preceding claim, wherein there is a correlation table for each recipient or recipient device, and wherein a translation table provides an index to the correlation table, and wherein, if multiple messages are deposited by the same originator for a single recipient device, the voicemail system references in the correlation table a list of the voicemails from the same originator and plays back some or all of the voicemails in response to a single access request call from the recipient device.

11. A voicemail system comprising a network interface and a processor, wherein the processor is adapted to perform the steps of:
receiving and storing a voicemail sent by a depositor and addressed to a recipient device,
sending to the recipient device a notification message including an access number;
receiving from the recipient device a request for access to the message in the form of a call dialling the access number, and
receiving the dialled access number from the recipient device and using it to access the specific voicemail without further recipient input, and playing the voicemail back to the recipient device, and
wherein the voicemail system is adapted to combine the access number as a suffix with a subscriber code to uniquely address the specific stored voicemail, and so is adapted to use the same access number for a plurality of different recipients while providing unique access to each voicemail, and
wherein the subscriber code is a calling line identification of the recipient.

12. A computer program product comprising a computer readable medium having a computer readable program code therein, said computer readable program code adapted to be executed to implement the steps of:
receiving and storing a voicemail sent by a depositor and addressed to a recipient device,
sending to the recipient device a notification message including an access number;
receiving from the recipient device a request for access to the message in the form of a call dialling the access number, and
receiving the dialled access number from the recipient device and using it to access the specific voicemail without further recipient input, and playing the voicemail back to the recipient device.
wherein the voicemail system combines the access number as a suffix with a subscriber code to uniquely address the specific stored voicemail, and so can use the same access number for a plurality of different recipients while providing unique access to each voicemail,
wherein the subscriber code is a calling line identification of the recipient,
wherein the voicemail system maintains in one or more tables correlations between access numbers on one side, and internal message indexes on the other side.

## Patentansprüche

1. Sprachnachrichtenmitteilungsverfahren, das von einem Telefonienetz ausgeführt wird und die folgenden Schritte beinhaltet:
Ein Sprachnachrichtensystem, das eine von einem Hinterleger gesendete und an ein Empfangsgerät adressierte Sprachnachricht empfängt und speichert,
wobei das Sprachnachrichtensystem eine Mitteilungsnachricht an das Empfangsgerät sendet, die eine Zugriffsnummer enthält;
wobei das Empfangsgerät nach dem Empfangen der Mitteilungsnachricht durch Wählen der Zugriffsnummer eine Anforderung an das Sprachnachrichtensystem zum Zugreifen auf die Nachricht sendet, und
wobei das Sprachnachrichtensystem die gewählte Zugriffsnummer von dem Empfangsgerät empfängt und sie ohne weitere Empfängereingaben zum Zugreifen auf die spezifische Sprachnachricht benutzt und die Sprachnachricht dem Empfangsgerät wiedergibt,
wobei das Sprachnachrichtensystem die Zugriffsnummer als Suffix mit einem Teilnehmercode kombiniert, um die spezifische gespeicherte Sprachnachricht eindeutig zu adressieren, und so dieselbe Zugriffsnummer für mehrere unterschiedliche Empfänger benutzen kann, während eindeutiger Zugang zu jeder Sprachnachricht bereitgestellt wird,
wobei der Teilnehmercode eine Anruferidentifikation des Empfängers ist,
wobei das Sprachnachrichtensystem in einer oder mehreren Tabellen Korrelationen zwischen Zugriffsnummern auf einer Seite und internen Nachrichtenindexen auf der anderen Seite führt.

2. Sprachnachrichtenmitteilungsverfahren nach Anspruch 1, wobei die Mitteilungsnachricht eine SMS ist.

3. Sprachnachrichtenmitteilungsverfahren nach Anspruch 1 oder 2, wobei leitungsgeschaltete Technologie vom Empfangsgerät zum Wählen der Zugriffsnummer benutzt wird.

4. Sprachnachrichtenmitteilungsverfahren nach einem vorherigen Anspruch, wobei die Mitteilung für eine automatische Voransicht durch das Empfangsgerät aufgebaut ist und wobei das Empfangsgerät eine automatische Erkennung der Zugriffsnummer in der Mitteilungsnachricht ausführt.

5. Sprachnachrichtenmitteilungsverfahren nach einem vorherigen Anspruch, wobei die Zugriffsnummer eine Länge N hat, die gleich der Länge ist, die vom E.164 Nummerierungsplan für das/die zutreffende Land und Region diktiert wird.

6. Sprachnachrichtenmitteilungsverfahren nach einem der Ansprüche 1 bis 4, wobei die Länge N der Zugriffsnummer die Länge der durch den E.164 Nummerierungsplan für das/die zutreffende Land und Region diktierten Länge der E.164 Nummer übersteigt, aber gleich oder kleiner als die maximale Länge einer E.164 Nummer gemäß Festlegung durch die Standards ist.

7. Sprachnachrichtenmitteilungsverfahren nach einem der Ansprüche 1 bis 4, wobei die Zugriffsnummer ein Kurzcode mit einer Länge ist, die geringer ist als die, die von einem E.164 Nummerierungsplan für das/die zutreffende Land und Region diktiert wird.

8. Sprachnachrichtenmitteilungsverfahren nach einem vorherigen Anspruch, wobei die Zugriffsnummer eine allgemeine Zugriffsnummernfolge und einen Suffix beinhaltet, wobei das Verfahren den Schritt beinhaltet, dass das Sprachnachrichtensystem eine Umsetzung von Zugriffsnummer in Indexe durchführt, die zum Korrelieren zu Sprachnachrichten nach Teilnehmer verwendet werden, und
wobei alle Stellen der Zugriffsnummer, einschließlich des Suffix, von dem Empfangsgerät und dem Netzwerk als Teil einer Rufeinrichtungssignalisierung für den Sprachnachrichten-Zugangsanforderungsanruf des Empfangsgeräts übertragen werden,
und wobei alle Stellen der Zugriffsnummer in die ISUP-Signalisierungsdomäne passen und Netzwerkelemente einschließlich MSCs so konfiguriert sind, dass sie den Sprachnachrichten-Zugangsanforderungsanruf nur unter Verwendung eines Teils der Zugriffsnummernstellen leiten, wobei die übrigen Stellen vom Sprachnachrichtensystem zum Abrufen und Wiedergeben der Sprachnachricht verwendet werden.

9. Sprachnachrichtenmitteilungsverfahren nach einem vorherigen Anspruch, wobei die Zugriffsnummer logisch mit Sätzen von Nachrichten gemäß einem Parameter wie Zeit oder Nachrichtenverfasser verknüpft ist.

10. Sprachnachrichtenmitteilungsverfahren nach einem vorherigen Anspruch, wobei es eine Korrelationstabelle für jeden/s Empfänger oder Empfangsgerät gibt und wobei eine Umsetztabelle einen Index auf die Korrelationstabelle gibt, und wobei, wenn mehrere Nachrichten vom selben Verfasser für ein einziges Empfangsgerät hinterlegt werden, das Sprachnachrichtensystem in der Korrelationstabelle eine Liste der Sprachnachrichten vom selben Verfasser referenziert und einige oder alle Sprachnachrichten als Reaktion auf einen einzelnen Zugangsanforderungsanruf vom Empfangsgerät wiedergibt.

11. Sprachnachrichtensystem, das eine Netzwerkschnittstelle und einen Prozessor umfasst, wobei der Prozessor so ausgelegt ist, dass er die folgenden Schritte beinhaltet:
Empfangen und Speichern einer von einem Hinterleger gesendeten und an ein Empfangsgerät adressierten Sprachnachricht,
Senden einer Mitteilungsnachricht zu dem Empfangsgerät, die eine Zugriffsnummer enthält;
Empfangen, von dem Empfangsgerät, einer Anforderung von Zugang zu der Nachricht in Form eines die Zugriffsnummer wählenden Anrufs, und
Empfangen der gewählten Zugriffsnummer von dem Empfangsgerät und Benutzen derselben ohne weitere Empfängereingabe zum Zugreifen auf die spezifische Sprachnachricht und Wiedergeben der Sprachnachricht auf dem Empfangsgerät, und
wobei das Sprachnachrichtensystem zum Kombinieren der Zugriffsnummer als Suffix mit einem Teilnehmercode zum eindeutigen Adressieren der spezifischen gespeicherten Sprachnachricht ausgelegt und somit zum Verwenden derselben Zugriffsnummer für mehrere verschiedene Empfänger ausgelegt ist, während eindeutiger Zugang zu jeder Sprachnachricht bereitgestellt wird, und
wobei der Teilnehmercode eine Anruferidentifikation des Empfängers ist.

12. Computerprogrammprodukt, das ein computerlesbares Medium mit einem computerlesbaren Programmcode darin umfasst, wobei der computerlesbare Programmcode so ausgelegt ist, dass er bei Ausführung die folgenden Schritte implementiert:
Empfangen und Speichern einer von einem Hinterleger gesendeten und an ein Empfangsgerät adressierten Sprachnachricht,
Senden einer Mitteilungsnachricht zu dem Empfangsgerät, die eine Zugriffsnummer enthält;
Empfangen, von dem Empfangsgerät, einer Anforderung von Zugang zu der Nachricht in Form eines die Zugriffsnummer wählenden Anrufs, und
Empfangen der gewählten Zugriffsnummer von dem Empfangsgerät und Benutzen derselben ohne weitere Empfängereingabe zum Zugreifen auf die spezifische Sprachnachricht und Wiedergeben der Sprachnachricht auf dem Empfangsgerät,
wobei das Sprachnachrichtensystem die Zugriffsnummer als Suffix mit einem Teilnehmercode kombiniert, um die spezifische gespeicherte Sprachnachricht eindeutig zu adressieren, so dass dieselbe Zugriffsnummer für mehrere verschiedene Empfänger benutzt werden kann, während eindeutiger Zugang zu jeder Sprachnachricht bereitgestellt wird,
wobei der Teilnehmercode eine Anruferidentifikation des Empfängers ist,
wobei das Sprachnachrichtensystem in einer oder mehreren Tabellen Korrelationen zwischen Zugriffsnummern auf einer Seite und internen Nachrichtenindexen auf der anderen Seite führt.

## Revendications

1. Un procédé de notification de courrier vocal exécuté par un réseau téléphonique et comprenant les opérations suivantes :
la réception et la conservation en mémoire par un système de courrier vocal d'un courrier vocal envoyé par un déposant et adressé à un dispositif récepteur,
l'envoi par le système de courrier vocal au dispositif récepteur d'un message de notification contenant un numéro d'accès,
la transmission par le dispositif récepteur, après réception du message de notification, d'une demande adressée au système de courrier vocal d'accès au message par la composition du numéro d'accès, et
la réception par le système de courrier vocal du numéro d'accès composé à partir du dispositif récepteur, son utilisation pour accéder au courrier vocal spécifique sans autre entrée du récepteur, et la diffusion en retour du courrier vocal vers le dispositif récepteur,
où le système de courrier vocal combine le numéro d'accès sous la forme d'un suffixe à un code d'abonné de façon à adresser de manière unique le courrier vocal spécifique conservé en mémoire, et ainsi il peut utiliser le même numéro d'accès pour une pluralité de récepteurs différents tout en fournissant un accès unique à chaque courrier vocal,
où le code d'abonné est une identification de ligne d'appel du récepteur,
où le système de courrier vocal entretient dans une ou plusieurs tables des corrélations entre des numéros d'accès d'une part et des index de messages internes d'autre part.

2. Un procédé de notification de courrier vocal selon la Revendication 1, où le message de notification est un SMS.

3. Un procédé de notification de courrier vocal selon la Revendication 1 ou 2, où une technologie de commutation de circuits est utilisée par le dispositif récepteur pour la composition du numéro d'accès.

4. Un procédé de notification de courrier vocal selon l'une quelconque des Revendications précédentes, où la notification est structurée en vue d'une prévisualisation automatique par le dispositif récepteur, et où le dispositif récepteur exécute une reconnaissance automatique du numéro d'accès dans le message de notification.

5. Un procédé de notification de courrier vocal selon l'une quelconque des Revendications précédentes, où le numéro d'accès possède une longueur N égale à celle prescrite par le plan de numérotation E.164 pour le pays et la zone concernés.

6. Un procédé de notification de courrier vocal selon l'une quelconque des Revendications 1 à 4, où la longueur N du numéro d'accès dépasse la longueur du numéro E.164 comme prescrit par le plan de numérotation E.164 pour le pays et la zone concernés, mais est inférieure ou égale à la longueur maximale d'un numéro E.164 telle que définie par les normes.

7. Un procédé de notification de courrier vocal selon l'une quelconque des Revendications 1 à 4, où le numéro d'accès est un code court, possédant une longueur inférieure à celle prescrite par un plan de numérotation E.164 pour le pays et la zone concernés.

8. Un procédé de notification de courrier vocal selon l'une quelconque des Revendications précédentes, où le numéro d'accès comprend une chaîne de numéro d'accès général et un suffixe, et le procédé comprend l'opération d'exécution par le système de courrier vocal d'une conversion de numéros d'accès vers des index qui sont utilisés de façon à effectuer des corrélations vers des courriers vocaux par abonné, et
où tous les chiffres du numéro d'accès, y compris le suffixe, sont transférés par le dispositif récepteur et le réseau dans le cadre d'une signalisation d'établissement d'appel pour l'appel de demande d'accès au courrier vocal par le dispositif récepteur,
et où tous les chiffres du numéro d'accès tiennent à l'intérieur du domaine de signalisation ISUP, et des éléments de réseau comprenant des MSC sont configurés de façon à acheminer l'appel de demande d'accès au courrier vocal en utilisant uniquement une partie des chiffres du numéro d'accès, les chiffres restants étant utilisés par le système de courrier vocal de façon à récupérer et diffuser en retour le courrier vocal.

9. Un procédé de notification de courrier vocal selon l'une quelconque des Revendications précédentes, où le numéro d'accès est relié logiquement à des ensembles de messages selon un paramètre tel que heure ou expéditeur du message.

10. Un procédé de notification de courrier vocal selon l'une quelconque des Revendications précédentes, où il existe une table de corrélation pour chaque récepteur ou dispositif récepteur, et où une table de conversion fournit un index vers la table de corrélation, et où, si une pluralité de messages sont déposés par le même expéditeur pour un dispositif récepteur unique, le système de courrier vocal référence dans la table de corrélation une liste des courriers vocaux provenant du même expéditeur et diffuse en retour certains ou tous les courriers vocaux en réponse à un appel de demande d'accès unique provenant du dispositif récepteur.

11. Un système de courrier vocal comprenant une interface réseau et un processeur, où le processeur est adapté de façon à exécuter les opérations suivantes :
la réception et la conservation en mémoire d'un courrier vocal envoyé par un déposant et adressé à un dispositif récepteur,
l'envoi au dispositif récepteur d'un message de notification contenant un numéro d'accès,
la réception à partir du dispositif récepteur d'une demande d'accès au message sous la forme d'un appel composant le numéro d'accès, et
la réception du numéro d'accès composé à partir du dispositif récepteur et son utilisation pour accéder au courrier vocal spécifique sans autre entrée du récepteur, et la diffusion en retour du courrier vocal au dispositif récepteur, et
où le système de courrier vocal est adapté de façon à combiner le numéro d'accès sous la forme d'un suffixe à un code d'abonné de façon à adresser de manière unique le courrier vocal spécifique conservé en mémoire, et ainsi est adapté de façon à utiliser le même numéro d'accès pour une pluralité de récepteurs différents tout en fournissant un accès unique à chaque courrier vocal, et
où le code d'abonné est une identification de ligne d'appel du récepteur.

12. Un produit de programme informatique comprenant un support lisible par ordinateur contenant un code de programme lisible par ordinateur, ledit code de programme lisible par ordinateur étant adapté de façon à être exécuté dans le but de mettre en oeuvre les opérations suivantes :
la réception et la conservation en mémoire d'un courrier vocal envoyé par un déposant et adressé à un dispositif récepteur,
l'envoi au dispositif récepteur d'un message de notification contenant un numéro d'accès,
la réception à partir du dispositif récepteur d'une demande d'accès au message sous la forme d'un appel composant le numéro d'accès, et
la réception du numéro d'accès composé à partir du dispositif récepteur et son utilisation pour accéder au courrier vocal spécifique sans autre entrée du récepteur, et la diffusion en retour du courrier vocal au dispositif récepteur,
où le système de courrier vocal combine le numéro d'accès sous la forme d'un suffixe à un code d'abonné de façon à adresser de manière unique le courrier vocal spécifique conservé en mémoire, et ainsi il peut utiliser le même numéro d'accès pour une pluralité de récepteurs différents tout en fournissant un accès unique à chaque courrier vocal,
où le code d'abonné est une identification de ligne d'appel du récepteur,
où le système de courrier vocal entretient dans une ou plusieurs tables des corrélations entre des numéros d'accès d'une part et des index de messages internes d'autre part.
